# EUROPEAN PATENT SPECIFICATION

(11) **EP 1 806 061 B1**
(45) Date of publication and mention of the grant of the patent: **02.03.2011**
(21) Application number: 06450004.4
(22) Date of filing: 10.01.2006
(51) Int. Cl.: A41D 27/28, A41D 31/00, D06M 23/16

(54) **Process for providing ventilation incisions on a flexible substrate using chemicals to regulate the opening of these incisions and flexible substrate obtained therefrom**
Verfahren zur Herstellung von Lufteinschnitten auf einem flexiblen Substrat mit Chemikalien zur Regulierung der Öffnung der Lufteinschnitten und so hergestelltes Substrat
Procédé de fabrication de fentes de ventilation sur un support flexible utilisant des produits chimiques pour réguler l'ouverture de ces fentes et support ainsi obtenu

(43) Date of publication of application: 11.07.2007
(73) Proprietor: Tanakorn, Wangbunyen, 10110 Bangkok (TH)
(72) Inventor: Tanakorn, Wangbunyen, 10110 Bangkok (TH)
(74) Representative: Patentanwaltskanzlei Matschnig & Forsthuber OG

(56) References cited:
- WO-A-2006/044210
- US-A1- 2005 172 378
- US-A1- 2005 227 047
- US-B1- 6 767 850

## Description

### Field of Invention

This invention relates to chemical engineering, particularly, the process of treating flexible substrates with a chemical or combination of chemicals in which the chemical's properties and its reaction to the environment regulates the function of the ventilation points prepared on the substrate.

### Background of the Invention

Different types of fabrics have different characteristics. Ability to breathe and moisture absorption are just some of the characteristic that the textile industry take into consideration when producing fabric. For this reason, ranges of fabrics are produced for use in different environments or weather conditions to provide maximum comfort to the user. However, due to changes in the environment or weather conditions, or as a result of the user's activities, the characteristics of the fabric still provide limited comfort. For instance, knitted fabrics are known to provide warmth in cool weather. This is because knitted fabrics are known for their high moisture absorption. In cool weather, the fabric absorbs moisture and the fabric's filaments expand. As a result, there is less exchange between the normal air and the hot air generated by the user's body heat. Thus, the hot air is trapped inside and keeps the user warm. In warm weather, high humidity from the air results in similar effects and the user feels even warmer and tends to sweat, thus, causing great discomfort. Other types of fabrics may be less sensitive to moisture. However, due to user's activities such as engaging in outdoor activities or playing sports, the exchange of hot air generated by body heat and the normal air is not fast enough making the user sweat causing discomfort.

There has been an attempt to increase air flow of the fabric or the clothing end product by reducing the size and number of threads when making the fabric or incorporating a net-like or open-meshed fabric into the article. The latter technique is predominant in sports wear and outdoor wear. These techniques improve the fabric's air flow to some extent, but there is room for improvement.

It is desirable for the fabric or clothing articles to breathe and adjust to changes in the air temperature, body temperature, or the weather conditions while providing maximum comfort to the user. Document US-A-6 767 850 describes a process for preparing a flexible substrate according to the preamble of claim 1 and a flexible substrate according to the preamble of claim 15.

Under this concept the inventor according to the present invention has expanded his ideas to cover different types of substrates other than fabric which is his specialty.

It is an objective of this invention to improve air flow and provide better ventilation of the flexible substrates by creating ventilation points on the said substrates. The process is obtained by treating the flexible substrate with a chemical or combinations of chemicals which react to environment factors such as temperature, moisture, or light. Cuts having predetermined shapes and designs as ventilation points are prepared on the flexible substrate. Once the flexible substrates treated with the chemical or combination of chemicals having reacted to the selected environment factors exposed to such environments, the chemical or combination of the selected chemicals reacts to the environment. The reaction causes the cuts on the flexible substrate to deform becoming ventilation points on the flexible substrates. Alternatively, for those flexible substrates that naturally react to the environment, the chemical or combination of chemicals may be treated to the flexible substrate so that its reaction to the environmental factor is restricted. The differential in reaction gradient causes the flexible substrate to deform at predetermined locations, thus, ventilation points on the flexible substrate are also obtained. The process for preparing a flexible substrate according to the invention is described in claim 1.

The process of improving ventilation by providing ventilation points on the flexible substrate will be subsequently described in greater detail. Other objects and advantages of the process according to the present invention will become apparent from a consideration of the following drawings and description of the preferred embodiment.

### Brief Description of the Drawings

The present invention is better understood with reference to the detailed description and to the drawings, in which:
Figure 1 shows an embodiment of the ventilation points formed on a substrate using the process of providing ventilation points on a substrate according to this invention wherein the shape of the ventilation point is a V-shape.
Figure 2 shows the embodiment of the ventilation points of Figure 1 after the substrate has been exposed to an environmental factor and the tab of the ventilation point is opened up as a reaction to the environment.
Figure 3 shows an embodiment of the ventilation points formed on a substrate using the process of providing ventilation points on a substrate according to this invention wherein the shape of the ventilation point is a perpendicular -cross.
Figure 4 shows the embodiment of the ventilation points of Figure 3 after the substrate has been exposed to an environmental factor and the tab of the ventilation point is opened up as a reaction to the environment.
Figure 5 shows an embodiment of the ventilation points formed on a substrate using the process of providing ventilation points on a substrate according to this invention wherein the shape of the ventilation point is a half-circle.
Figure 6 shows the embodiment of the ventilation points of Figure 5 after the substrate has been exposed to an environmental factor and the tab of the ventilation point is lifted up as a reaction to the environment.
Figure 7 shows an embodiment of the ventilation points formed on a substrate using the process of providing ventilation points on a substrate according to this invention wherein the shape of the ventilation point is a half-circular.
Figure 8 shows the embodiment of the ventilation points of Figure 7 after the substrate has been exposed to an environmental factor and the tab of the ventilation point curls-up as a reaction to the environment.

### Description of the Preferred Embodiment of the Invention

The objective of this invention is to improve air flow and provide better ventilation of the flexible substrates by creating ventilation points on the substrates. (For the purpose of description, the flexible substrate in this context will be referred to as "substrate".) The substrate is treated with a chemical or combination of chemicals (for the purposes of description, the chemical or combination of chemicals in this context will be referred to as "chemical") which reacts to environment factors such as temperature, moisture, or light. Once the treated substrate is exposed to an environment factor that reaches a certain level or intensity that the chemical reacts to, the ventilation points that have been prepared on the treated substrate will deform corresponding to their shapes and designs. The deformation of the ventilation points may be in the form of opening, closing, rolling-up, spreading-apart, lifting-up, and/or bending.

The process of improving ventilation of substrates by providing ventilation points on the substrate according to this invention comprises four main steps of selecting the substrate, chemical selection and preparation, application of chemical onto the substrate, and creating the ventilation points on the substrate.

### Selecting the Substrate

Preferably, the substrate should be of any flexible substrate of which flexed or deformed as a result of the force of the reaction of the chemicals that were used applies on or treated onto the substrate. Examples of substrates that are applicable to the process according to this invention include, but are not limited to, fabric, plastic, canvas, or the like.

### Chemical Selection/Preparation

The selection of chemicals that are used for treating the substrate depends on the properties of the chemicals. The chemical selection is determined by the environment the substrate will be exposed to or the completed product incorporating the substrate. For example, if the treated substrate or completed product will be used in an environment with high moisture, a chemical that reacts to certain levels of moisture will be used. If the completed product will be used in an environment with a high temperature, the chemicals that react to certain ranges of high temperatures will be used. If the high temperature is caused by high light intensity, corresponding chemicals that react to ranges of light intensity may be used and so on.

Alternatively, if the substrates are naturally sensitive to an environmental factor such as moisture, the chosen chemical will not necessarily react to that environment. The chemical may be used to restrict the reaction of the substrate with the environment. The chemical or chemicals with different concentrations are applied to only a selected area or the entire surface of the substrate resulting in different gradients in reaction rate between the different concentrations of treated and non-treated areas. The uneven rate of reaction causes the ventilation points created on the substrate to deform according to the predetermined shapes and designs.

For the convenience of substrate treatments, preferably the chemical or combination of chemical should be prepared in liquid form.

### Application of Chemical onto the Substrate

The selected chemicals with required properties, i.e. reacts to the corresponding environment are (that the substrate of which has been treated and prepared ventilation points according to this invention or products incorporating said substrate will be exposed to) applied onto the substrate by means of spraying, printing, silk-screening, laminating, or the like. The mode of application of the chemical onto the substrate depends on the type of substrate or its properties or characteristics such as thickness, hardness, softness, texture, absorption ability, etc. Depending on the design of the ventilation points, types of substrate, the application of the chemical onto the substrate may be applied onto the ventilation points (cut areas) according to the ventilation point's shape or design. The chemical may be applied in a spot application or on the entire sheet of the substrate. It can be applied on only one or both surfaces of the substrate. In addition, it is possible to apply a chemical having one concentration on one surface of the substrate while applying a chemical having a different concentration on another surface. Further, the chemical can be applied in strips or alternate strips of different concentrations.

### Creating Ventilation Points on the Substrate

Creating ventilation points on the substrate may be carried out before or after treating the substrate with the chemical, but preferably, the ventilation points on the substrate are created after treating the substrate with the chemical. The shape and design of the ventilation points may be of any desired shape or design such as half circle, half rectangle, star shape, V-shape, U-shape, perpendicular-cross, X-shape, etc. The cuts corresponding to the desired shape and design are then made on the selected areas of the substrate creating ventilation points on the substrate. The cuts may be made manually or automatically. Laser cutting is most preferred as it reduces fraying on the cuts that form the ventilation points.

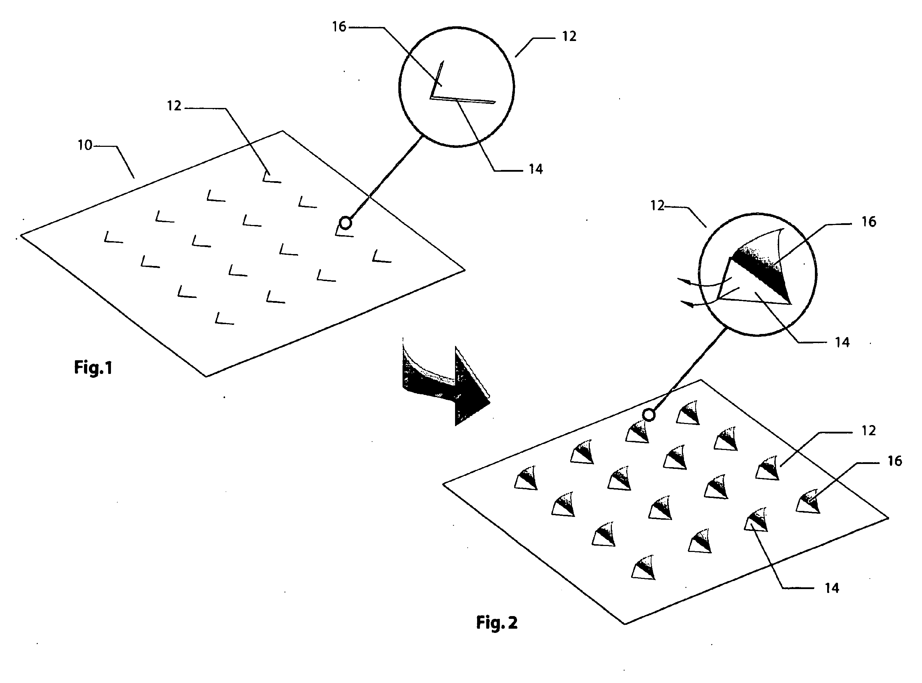

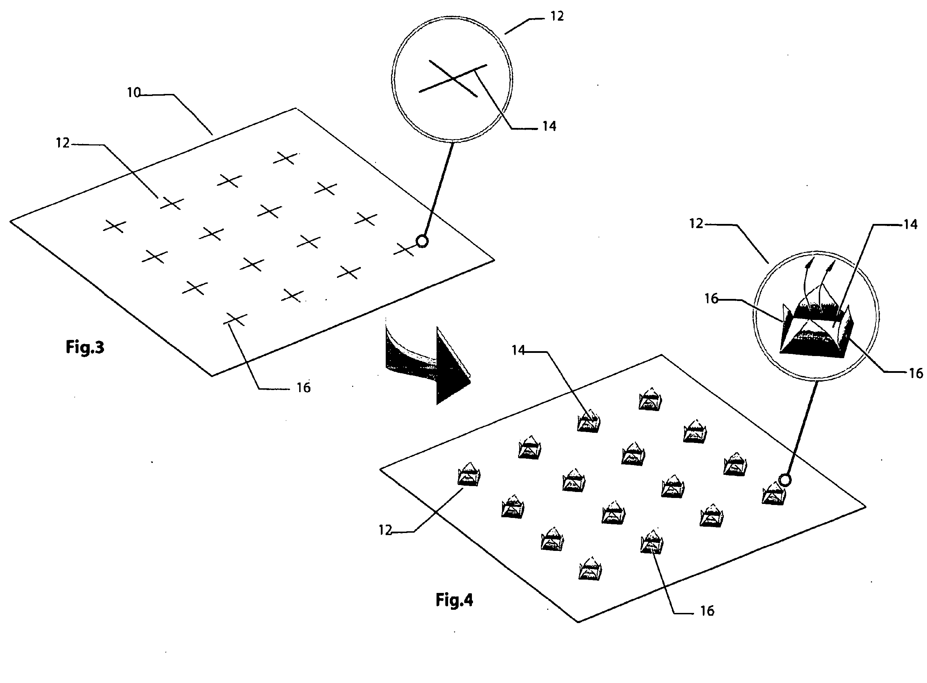

As shown in Figure 1 the cuts are made in a V-shape and as shown in Figure 3 the cuts are made in a perpendicular-cross shape.

As disclosed, after a substrate is chosen and the environment which the treated substrate with ventilation points prepared according to this invention or products incorporating the substrate will be exposed to is pre-confirmed, the chemical which reacts to such environment is applied onto the substrate. The mode of chemical application depends on the properties and characteristics of the substrate and the shapes and designs of the predetermined ventilation points. The chemical may be applied onto the substrates by spraying, printing, silk screening, or the like. The application may be in the form of a spot, stripe, or on the entire surface of the substrate compatible to the shape and design of ventilation points and the properties and characteristics of the substrate. After the chemical application is completed, the cuts of the ventilation points are made on the substrate according to the predetermined shape and design. Once the prepared substrates or the products incorporating such substrate are exposed to the environment to which the chemical applied onto the substrate reacts, the reaction of the chemical to the environment or the natural reaction of the substrate (untreated against treated) results in different gradients of reaction or creates tension on the ventilation points urging the ventilation points to deform corresponding to their shape and design. The deformation of the ventilation may be in a form of curling up, rolling up, opening, spreading apart, or bending. These forms of deformation permit better and faster ventilation providing optimum comfort to the user. The ventilation points will not deform in normal conditions or if intensity of the environment does not reach that level which triggers the chemical reaction. After the deformation has taken place and either the substrate or the product incorporating the substrate prepared according to this invention is removed from the environment or the environment has changed to a lesser intensity than the chemical will react to, the deformation will return to its original state or shape.

The process according to this invention is applicable to various types of substrates and thus its uses spread to various types of industries. In the garment industry, the invention may be used in garment or clothing construction in lieu of net-like or open-meshed fabric. This is particularly true in sports wear and outdoor wear wherein fast ventilation provides greater comfort to the user as body heat exchanges with the normal air temperature quickly cooling the user. In the housing industry, the invention may be incorporated as a shade or blind or part of a window or other suitable parts of the house helping to improve air circulation or ventilation of the house. In leisure/recreational industries, the invention may be used with camping equipment such as tents improving air circulation/ventilation or exchange of hot air from inside to outside the tent.

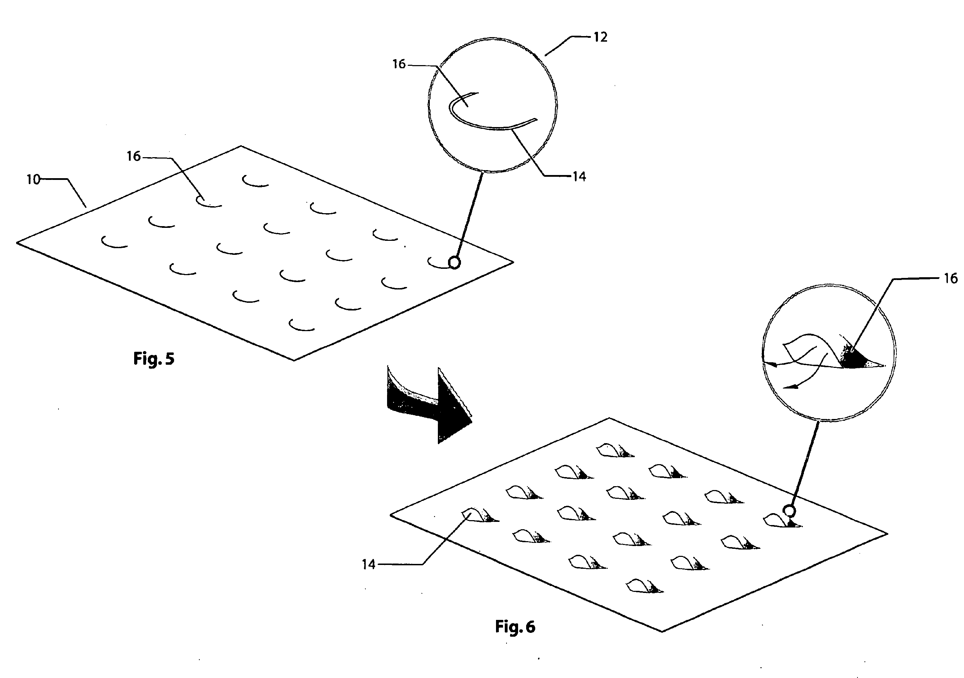

For the purpose of illustration, the process according to this invention will be described as an example in full detail of which the substrate of use is a fabric and the ventilation point is a half circle shape and shown in Figure 5. The objects and advantages of the process according to the present invention will become apparent from a consideration of the following illustration.

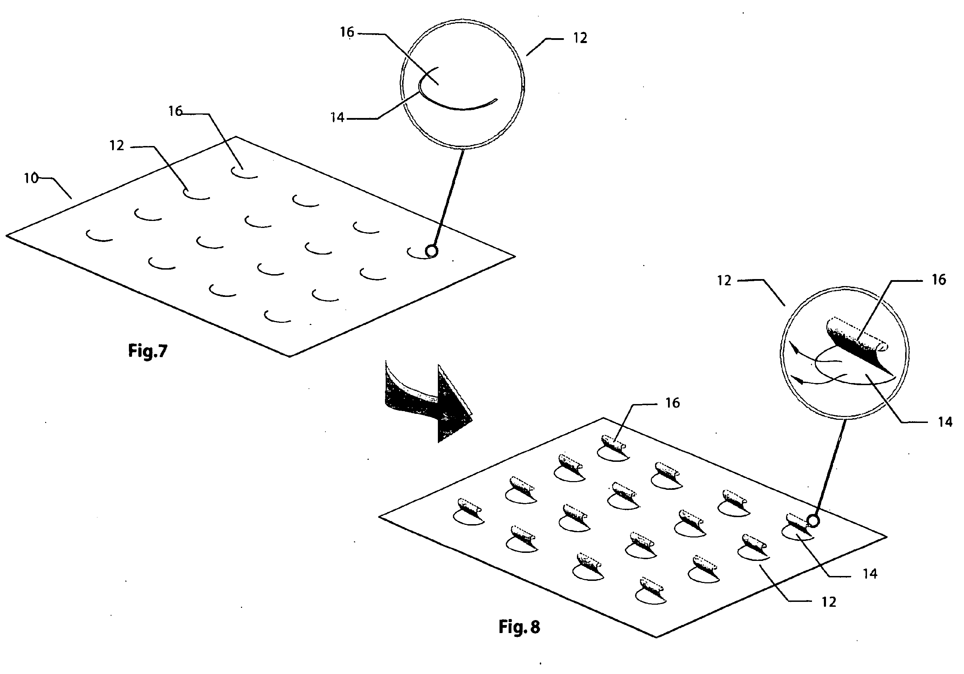

A fabric (10) is selected and the clothing articles comprised of the fabric (10) prepared according to this invention are set to be sensitive to moisture. Accordingly, a chemical which reacts to moisture such as hydrophilic polymer is used. The shape of the ventilation point (12) is design to be a half-circle shape as shown in Figure 5. The intended ventilation points (12) are arranged in rows. The chemical solution is manually applied onto the intended locations of the ventilation points (12) having a shape and design corresponding to the intended ventilation point's location, shape, and design. Using a laser beam, half-circle cuts corresponding to the half-circle shape of the intended ventilation points are made in the fabric (10). The laser cutting results in a small space (14) on the fabric (10) being burnt away by the laser beam, thereby becoming the ventilation point (12). Each ventilation point (12) has a tab (16) generated from the cutting and is the area to which the chemical solution is applied. Once the prepared fabric (10), with ventilation points (12), is exposed to moisture, the chemical reacts with the moisture causing the tabs (16) to deform by lifting up as shown in Figure 6. As a result, the edges of the tab (16) will curl inward causing the middle section of the tab (16) to rise up similar to a dome shape, widening the space(14) created by the laser cutting as shown in Figure 6. The widening of the space (14) becomes a ventilation hole that allows a larger amount of air to flow through and thus, improves ventilation of the fabric. If a person wears clothing articles incorporating the fabric prepared by the process according to this invention, and is exposed to moisture, (moisture may be generated through sweating) the tab (16) will deform and the space (14) widens and becomes a ventilation point that allows a larger quantity of air to flow through. Accordingly, the ventilation of the clothes is improved making the user feel more comfortable without the feeling of dampness. Similarly, in hot and humid weather, better ventilation of the clothes keeps the user cool and minimizes sweating. Further and additional shapes and arrangements of the ventilation points prepared according to the invention are shown in Figures 2, 4, and 8.

Similarly, thermosensitive and/or photosensitive polymer, for example a polyurethane resin, maybe used if the substrate or a product incorporate the substrate treated according to this invention is aimed to react to temperature and/or light respectively.

## Claims

1. A process for preparing a flexible substrate (10) having ventilation points (12), wherein the ventilation points (12) deform in response to a variation of an environmental factor, comprising:
providing cuts (12) as ventilation points (12) on the flexible substrate (10),
treating the flexible substrate (10) with a chemical or a combination of chemicals either before or after providing cuts on the flexible substrate (10), wherein the chemical or the combination of chemicals react to an environmental factor such that the ventilation points (12) open and close in response to a variation of the environmental factor, and
**characterized in that** different concentrations of the chemical or the combination of chemicals are applied to the flexible substrate (10) to create a gradient in reaction rates between the different concentrations on the flexible substrate (10) or between treated (16) and non-treated areas of the flexible substrate (10).

2. The process according to Claim 1 **characterized by** the steps of (i) selecting the flexible substrate (10), (ii) applying the chemical or the combination of chemicals on the flexible substrate (10), and (iii) cutting the ventilation points (12) into the flexible substrate (10).

3. The process according to claim 1 or 2, **characterized in that** the environmental factor is at least one of temperature, moisture, and light.

4. The process according to claim 3, **characterized in that** the environmental factor comprises temperature and the chemical or the combination of chemicals comprises a thermosensitive polymer.

5. The process according to claim 3, **characterized in that** the environmental factor comprises moisture and the chemical or the combination of chemicals comprises a hydrophilic polymer.

6. The process according to claim 3, **characterized in that** the environmental factor comprises light and the chemical or the combination of chemicals comprises a photosensitive polymer.

7. The process according to any one of claims 1 to 6, **characterized in that** the chemical or the combination of chemicals are applied by mode of printing, laminating, silk-screening, or hand transferring.

8. The process according to any one of claims 1 to 7, **characterized in that** the chemical or the combination of chemicals is applied onto the flexible substrate (10) corresponding to the location, shape, and design of the ventilation points (12).

9. The process according to any one of claims 1 to 8, **characterized in that** the chemical or the combination of chemicals is applied onto the flexible substrate on at least one entire surface of the flexible substrate.

10. The process according to claim 9, **characterized in that** the chemical or the combination of chemicals is applied to both sides of the flexible substrate.

11. The process according to claim 10, **characterized in that** the concentration of the chemical or combination of chemicals applied onto each surface is of a different concentration.

12. The process according to any one of claims 1 to 8, **characterized in that** the application of chemical or the combination of chemicals is applied onto the surface of the flexible substrate in stripes, alternating treated stripes and non-treated stripes.

13. The process according to any one of claims 1 to 12 comprising cutting a ventilation point (12) into the flexible substrate (10) with a shape providing at least one tab (16).

14. The process according to claim 13, **characterized in that** the chemical or the combination of chemicals is applied to the tab (16) such that the tab (16) deforms in response to the environmental factor to open the ventilation point (12).

15. A flexible substrate (10) having deformable ventilation points (12), wherein the ventilation points (12) deform in response to a variation of an environmental factor, wherein the ventilation points (12) are cuts provided on the flexible substrate, the flexible substrate having a chemical or a combination of chemicals applied thereto, such that the chemical or the combination of chemicals enable the ventilation points (12) to open and close in response to a variation of the environmental factor,
**characterized in that** the flexible substrate has different concentrations of the chemical or the combination of chemicals applied thereto, creating a gradient in reaction rates between the different concentrations on the flexible substrate (10) or between treated (16) and non-treated areas of the flexible substrate (10).

## Patentansprüche

1. Ein Verfahren zum Herstellen eines flexiblen Trägermaterials (10) mit Ventilationsstellen (12), wobei die Ventilationsstellenstellen (12) sich als Antwort auf eine Änderung eines umgebungsbedingten Faktors deformieren, umfassend:
Bilden von Schnitten (12) als Ventilationsstellen (12) auf dem flexiblen Trägermaterial (10),
Behandeln des flexiblen Trägermaterials (10) mit einer Chemikalie oder eine Kombination von Chemikalien entweder vor oder nach dem Bilden von Schnitten auf dem flexiblen Trägermaterial (10), wobei die Chemikalie oder die Kombination von Chemikalien auf einen umgebungsbedingten Faktor reagiert, so dass sich die Ventilationsstellen (12) als Antwort auf eine Änderung des umgebungsbedingten Faktors öffnen oder schließen, und
**dadurch gekennzeichnet, dass** verschiedene Konzentrationen der Chemikalie oder der Kombination von Chemikalien auf dem flexiblen Trägermaterial (10) aufgebracht werden, zum Erzeugen eines Reaktionsraten-Gradienten zwischen den verschiedenen Konzentrationen auf dem flexiblen Trägermaterial (10) oder zwischen behandelten (16) und unbehandelten Bereichen auf dem flexiblem Trägermaterial (10).

2. Das Verfahren nach Anspruch 1, **gekennzeichnet durch** die Schritte von (i) Auswählen des flexiblen Trägermaterials (10), (ii) Aufbringen der Chemikalie oder der Kombination von Chemikalien auf dem flexiblen Trägermaterial (10) und (iii) Schneiden der Ventilationsstellen (12) in das flexible Trägermaterial (10).

3. Das Verfahren nach Anspruch 1 oder 2, **dadurch gekennzeichnet, dass** der umgebungsbedingte Faktor mindestens einer von Temperatur, Feuchtigkeit oder Licht ist.

4. Das Verfahren nach Anspruch 3, **dadurch gekennzeichnet, dass** der umgebungsbedingte Faktor Temperatur umfasst und die Chemikalie oder die Kombination von Chemikalien ein thermosensitives Polymer umfasst.

5. Das Verfahren nach Anspruch 3, **dadurch gekennzeichnet, dass** der umgebungsbedingte Faktor Feuchtigkeit umfasst und die Chemikalie oder die Kombination von Chemikalien ein hydrophiles Polymer umfasst.

6. Das Verfahren nach Anspruch 3, **dadurch gekennzeichnet, dass** der umgebungsbedingte Faktor Licht umfasst und die Chemikalie oder die Kombination von Chemikalien ein photosensitives Polymer umfasst.

7. Das Verfahren nach einem der Ansprüche 1 bis 6, **dadurch gekennzeichnet, dass** die Chemikalie oder die Kombination von Chemikalien durch Drucken, Beschichten, Siebdruck oder händisches Übertragen aufgebracht wird.

8. Das Verfahren nach einem der Ansprüche 1 bis 7, **dadurch gekennzeichnet, dass** die Chemikalie oder die Kombination von Chemikalien auf dem flexiblen Trägermaterial (10) in Übereinstimmung mit dem Ort, der Form und dem Design der Ventilationsstellen (12) aufgebracht wird.

9. Das Verfahren nach einem der Ansprüche 1 bis 8, **dadurch gekennzeichnet, dass** die Chemikalie oder die Kombination von Chemikalien auf dem flexiblen Trägermaterial auf zumindest einer gesamten Oberfläche des flexiblen Trägermaterials aufgebracht wird.

10. Das Verfahren nach Anspruch 9, **dadurch gekennzeichnet, dass** die Chemikalie oder die Kombination von Chemikalien auf beiden Seiten des flexiblen Trägermaterials aufgebracht wird.

11. Das Verfahren nach Anspruch 10, **dadurch gekennzeichnet, dass** die Konzentration der Chemikalie oder der Kombination von Chemikalien, die auf jeder Oberfläche aufgebracht ist, eine unterschiedliche Konzentration aufweist.

12. Das Verfahren nach einem der Ansprüche 1 bis 8, **dadurch gekennzeichnet, dass** das Aufbringen der Chemikalie oder der Kombination von Chemikalien auf der Oberfläche des flexiblen Trägermaterials in Streifen, alternierenden behandelten Streifen und unbehandelten Streifen angewendet wird.

13. Das Verfahren nach einem der Ansprüche 1 bis 12 umfassend das Schneiden einer Ventilationsstelle (12) in das flexible Trägermaterial (10) in einer Form, die zumindest einen Streifen (16) bildet.

14. Das Verfahren nach Anspruch 13, **dadurch gekennzeichnet, dass** die Chemikalie oder die Kombination von Chemikalien auf dem Streifen (16) aufgebracht wird, so dass sich der Streifen (16) als Antwort auf den umgebungsbedingten Faktor zum Öffnen der Ventilationsstelle (12) deformiert.

15. Ein flexibles Trägermaterial (10) mit deformierbaren Ventilationsstellen (12), wobei die Ventilationsstellen (12) sich als Antwort auf eine Änderung eines umgebungsbedingten Faktors deformieren, wobei die Ventilationsstellen (12) auf dem flexiblen Trägermaterial gebildete Schnitte sind, das flexible Trägermaterial eine darauf aufgebrachte Chemikalie oder eine Kombination von Chemikalien aufweist, so dass die Chemikalie oder die Kombination von Chemikalien den Ventilationsstelle (12) als Antwort auf eine Änderung des umgebungsbedingten Faktors ein Öffnen und Schließen ermöglichen, **dadurch gekennzeichnet, dass** das flexiblen Trägermaterial darauf aufgebrachte unterschiedliche Konzentrationen der Chemikalie oder der Kombination von Chemikalien aufweist, wodurch ein Reaktionsraten-Gradient zwischen den verschiedenen Konzentrationen auf dem flexiblen Trägermaterial (10) oder zwischen behandelten (16) und unbehandelten Bereichen auf dem flexiblem Trägermaterial (10) erzeugbar ist.

## Revendications

1. Procédé de préparation d'un substrat flexible (10) ayant des points de ventilation (12), dans lequel les points de ventilation (12) se déforment en réponse à une variation d'un facteur environnemental, consistant à :
former des découpes (12) en tant que points de ventilation (12) sur le substrat flexible (10),
traiter le substrat flexible (10) avec un produit chimique ou une combinaison de produits chimiques avant ou bien après la formation de découpes sur le substrat flexible (10), le produit chimique ou la combinaison de produits chimiques réagissant à un facteur environnemental de telle sorte que les points de ventilation (12) s'ouvrent et se ferment en réponse à une variation du facteur environnemental, et
**caractérisé en ce que** différentes concentrations du produit chimique ou de la combinaison de produits chimiques sont appliquées sur le substrat flexible (10) pour créer un gradient des taux de réaction entre les différentes concentrations sur le substrat flexible (10) ou entre les zones traitées (16) et non traitées du substrat flexible (10).

2. Procédé selon la revendication 1, **caractérisé par** les étapes consistant à (i) sélectionner le substrat flexible (10), (ii) appliquer le produit chimique ou la combinaison de produits chimiques sur le substrat flexible (10), et (iii) découper les points de ventilation (12) dans le substrat flexible (10).

3. Procédé selon la revendication 1 ou 2, **caractérisé en ce que** le facteur environnemental est au moins un de la température, de l'humidité et de la lumière.

4. Procédé selon la revendication 3, **caractérisé en ce que** le facteur environnemental comporte la température et le produit chimique ou la combinaison de produits chimique comporte un polymère thermosensible.

5. Procédé selon la revendication 3, **caractérisé en ce que** le facteur environnemental comporte l'humidité et le produit chimique ou la combinaison de produits chimiques comporte un polymère hydrophile.

6. Procédé selon la revendication 3, **caractérisé en ce que** le facteur environnemental comporte la lumière et le produit chimique ou la combinaison de produits chimiques comporte un polymère photosensible.

7. Procédé selon l'une quelconque des revendications 1 à 6, **caractérisé en ce que** le produit chimique ou la combinaison de produits chimiques est appliqué(e) par mode d'impression, de stratification, de lithographie ou de transfert manuel.

8. Procédé selon l'une quelconque des revendications 1 à 7, **caractérisé en ce que** le produit chimique ou la combinaison de produits chimiques est appliqué(e) sur le substrat flexible (10) en correspondance avec l'emplacement, la forme et la conception des points de ventilation (12).

9. Procédé selon l'une quelconque des revendications 1 à 8, **caractérisé en ce que** le produit chimique ou la combinaison de produits chimique est appliqué(e) sur le substrat flexible sur au moins une surface entière du substrat flexible.

10. Procédé selon la revendication 9, **caractérisé en ce que** le produit chimique ou la combinaison de produits chimiques est appliqué(e) sur les deux côtés du substrat flexible.

11. Procédé selon la revendication 10, **caractérisé en ce que** la concentration du produit chimique ou de la combinaison de produits chimiques appliqué(e) sur chaque surface est différente.

12. Procédé selon l'une quelconque des revendications 1 à 8, **caractérisé en ce que** le produit chimique ou la combinaison de produits chimiques est appliqué(e) sur le substrat flexible en bandes, en alternant des bandes traitées et des bandes non traitées.

13. Procédé selon l'une quelconque des revendications 1 à 12, comportant la découpe d'un point de ventilation (12) dans le substrat flexible (10) avec une forme présentant au moins une languette (16).

14. Procédé selon la revendication 13, **caractérisé en ce que** le produit chimique ou la combinaison de produits chimiques est appliqué(e) sur la languette (16) de telle sorte que la languette (16) se déforme en réponse au facteur environnemental pour ouvrir le point de ventilation (12).

15. Substrat flexible (10) ayant des points de ventilation déformables (12), dans lequel les points de ventilation (12) se déforment en réponse à une variation d'un facteur environnemental, dans lequel les points de ventilation (12) sont des découpes prévues sur le substrat flexible, le substrat flexible recevant l'application d'un produit chimique ou d'une combinaison de produits chimiques, de telle sorte que le produit chimique ou la combinaison de produits chimiques permette aux points de ventilation (12) de s'ouvrir et se fermer en réponse à une variation du facteur environnemental,
**caractérisé en ce** le substrat flexible reçoit l'application de différentes concentrations du produit chimique ou de la combinaison de produits chimiques, créant un gradient de taux de réaction entre les différentes concentrations sur le substrat flexible (10) ou entre les zones traitées (16) et non traitées du substrat flexible (10).
